# EUROPÄISCHE PATENTSCHRIFT

(11) **EP 2 835 905 B1**
(45) Veröffentlichungstag und Bekanntmachung des Hinweises auf die Patenterteilung: **13.04.2016**
(21) Anmeldenummer: 14179462.8
(22) Anmeldetag: 01.08.2014
(51) Int. Cl.: H02P 6/00, B62D 5/04, H01H 1/60

(54) **VERFAHREN ZUR ERZEUGUNG GLEICHMÄßIG NIEDEROHMIGER KONTAKTE IN EINEM STERNPUNKTRELAIS**
METHOD FOR GENERATING UNIFORMLY LOW OHMIC CONTACTS IN A STAR POINT RELAY
PROCÉDÉ DE FABRICATION DE CONTACTS DE BASSE IMPÉDANCE DANS UN RELAIS NEUTRE

(30) Priorität: 09.08.2013 DE 102013215789
(43) Veröffentlichungstag der Anmeldung: 11.02.2015
(73) Patentinhaber: Continental Automotive GmbH, 30165 Hannover (DE)
(72) Erfinder: Gunselmann, Christian, 65835 Liederbach (DE)
(74) Vertreter: Brand, Markus

(56) Entgegenhaltungen:
- EP-A1- 1 139 361
- DE-A1-102011 115 707
- DE-B- 1 154 554
- DE-C1- 19 711 622

## Beschreibung

Die Erfindung betrifft ein Verfahren zum Fritten elektrischer Kontakte, insbesondere eines Sternpunktrelais, einer Antriebsvorrichtung, insbesondere einer Servolenkungsvorrichtung für Kraftfahrzeuge, gemäß dem Oberbegriff des Anspruchs 1, sowie eine Steuervorrichtung zum Ausführen des Verfahrens und eine Servolenkungsvorrichtung mit der erfindungsgemäßen Steuervorrichtung.

Elektrische Kontakte eines Sternpunktrelais können durch unterschiedliche Ursachen verunreinigt werden, so dass dadurch der elektrische Widerstand der elektrischen Kontakte verändert wird. Mögliche Ursachen sind beispielsweise Rückstände aus der Fertigung, Ablagerungen und Oberflächenänderungen durch Verbrennungen bei Öffnungs- und Schließfunken, mikroskopische Partikel, die zum Beispiel durch Erschütterungen auf die Kontakte gelangen und chemische Reaktion des Kontaktmaterials mit dem Umgebungsgas.

Elektrische Lenkungen benötigen häufig ein Sternpunktrelais zum Unterbrechen des Stromflusses in den Spulen des elektrischen Motors in einem Notfall. Im Normalbetrieb müssen die Kontakte des Sternpunkrelais geschlossen sein. Verunreinigungen an den elektrischen Kontakten am Sternpunktrelais und damit veränderte elektrische Widerstände der Kontakte können dabei zu einem spürbaren "Rippeln" am Lenkrad führen. Ferner können ungleichmäßige elektrische Widerstände am Sternpunktrelais zu einer Abschaltung der Lenkunterstützung führen, wenn dadurch Algorithmen zur Überwachung von Motorfehlern ausgelöst werden.

Es ist daher notwendig, nach jedem Schließvorgang des Relais die elektrischen Widerstände der elektrischen Kontakte zu reinigen und auf diese Weise den Norm- bzw. Sollwert des elektrischen Widerstandes wiederherzustellen. Bekannt ist es hierzu einen elektrischen Kontakt zu fritten, wobei ein starker Stromimpuls über die elektrischen Kontakte fließt, um ungewünschte Ablagerungen oder Schichten auf den elektrischen Kontakten zu entfernen und den Kontaktwiderstand zu reduzieren.

Bei der elektrischen Lenkung gelten jedoch die Randbedingungen, dass die Frittung vom Fahrer prinzipiell am Lenkrad nicht wahrgenommen werden darf. Ausnahmen davon bilden Fälle mit besonders hohen Widerständen. In solchen Fällen darf die Frittung nur eine begrenzte Lenkradbewegung von wenigen Grad für eine sehr kurze Zeit hervorrufen. Hinzu kommt, dass nach der Frittung alle drei Kontakte des Sternpunktrelais einen gleichmäßigen bzw. symmetrischen Widerstand aufweisen müssen.

Ein Verfahren zum Fritten electrischer Kontakte ist aus DE 10 2011 115707 bekannt.

**Aufgabe der Erfindung** ist es daher, ein Verfahren aufzuzeigen, mittels dessen eine Frittung der elektrischen Kontakte durchgeführt werden kann, welche die vorgenannten Randbedingungen im Wesentlichen einhält.

Die Aufgabe wird gelöst gemäß eines Verfahrens der eingangs genannten Art, bei dem ein im Wesentlichen reiner Blindstrom an die Motoreinrichtung zugeführt wird, wobei der Blindstrom auch durch die elektrischen Kontakte fließt.

Die Erfindung beruht auf dem Grundgedanken, dass mittels des Blindstroms ein realer Stromfluss durch die elektrischen Kontakte erzeugt wird, ohne eine Wirkleistung der elektrischen Motoreinrichtung zu erzeugen. Zum Fritten des elektrischen Kontaktes wird daher ein im Wesentlichen als Blindstrom wirkender Strom zugeführt, wobei der Wirkanteil des zugeführten Stroms gering ist, so dass die vorgenannten Randbedingungen eingehalten werden. Bei dem Blindstrom handelt es sich somit um einen realen Strom, der lediglich keine oder nur eine sehr geringe Wirkleistung entfaltet. Die elektrischen Kontakte sind mit der Motoreinrichtung elektrisch gekoppelt, so dass der an die Motoreinrichtung zugeführte Blindstrom auch durch die elektrischen Kontakte, insbesondere des Sternpunktrelais, fließt und die Kontakte auf diese Weise gefrittet werden.

Dabei wird das erfindungsgemäße Verfahren vorteilhafterweise so ausgeführt, dass die Motoreinrichtung mittels des Blindstroms im Wesentlichen drehmomentfrei betreibbar ist. Auf diese Weise können die elektrischen Kontakte gefrittet werden ohne ein Drehmoment zu erzeugen, das zu einer spürbaren Lenkrad Bewegung geführt.

Bei einer vorteilhaften Ausführungsform des erfindungsgemäßen Verfahrens weist die Motoreinrichtung ein Rotorelement mit einem Rotormagnetfeld und ein Statorelement mit mehreren Wicklungsspulen auf, wobei durch zuführen des Blindstroms in die Wicklungsspulen ein Statormagnetfeld erzeugbar ist, wobei der Blindstrom derart zugeführt wird, dass die Pole des Statormagnetfeldes gleichsinnig zu den Polen des Rotormagnetfeldes ausgerichtet sind. Gemäß dieser Ausführungsform des Verfahrens wird das Statormagnetfeld derart eingestellt, so dass die Pole des Magnetfeldes sich mit dem des Rotormagnetfeldes decken. Anders formuliert zeigt das resultierende Magnetfeld des Statorelements in die gleiche Richtung wie das Magnetfeld des Rotorelements. Die gleichnamigen Pole der Magnetfelder liegen übereinander, d.h. Nord über Nord und Süd über Süd, so dass sich das Rotorelement in einer instabilen Gleichgewichtslage befindet, vergleichbar mit einer Kugel auf der Spitze eines Halbkreises. Die elektrischen Kontakte können in dieser Position mittels des Blindstroms gefrittet werden, ohne dass der Blindstrom eine Wirkleistung entfaltet und das Rotorelement dadurch ein Drehmoment erfährt.

Vorteilhafterweise wird das erfindungsgemäße Verfahren dadurch weitergebildet, dass der Blindstrom kontinuierlich derart angepasst wird, dass die Pole des Statormagnetfeldes im Wesentlichen gleichsinnig zu den Polen des Rotormagnetfeldes ausgerichtet sind. Der an die Wicklungsspulen zugeführte Blindstrom wird kontinuierlich so angepasst, dass das Statormagnetfeld dem Rotormagnetfeld nachläuft und die instabile Gleichgewichtslage während des Frittungsvorgangs erreicht wird. Auf diese Weise wird sichergestellt, dass auch bei nicht gleichsinniger Ausrichtung der Magnetfelder, das Statormagnetfeld durch die kontinuierliche Anpassung des Blindstroms sich mit der Zeit gleichsinnig zum Rotormagnetfeld ausrichtet bzw. die Magnetfelder sich in diese Stellung einpendeln.

Vorteilhafterweise wird das erfindungsgemäße Verfahren dadurch weitergebildet, dass die Motoreinrichtung ein Sensorelement zum Messen der relativen Position des Rotorelements zum Statorelement, insbesondere Drehwinkel, aufweist, wobei der Blindstrom in Abhängigkeit von der relativen Position des Rotorelements zugeführt wird. Das Statormagnetfeld kann auf diese Weise, passend zum Rotormagnetfeld ausgerichtet, durch Zufuhr des entsprechenden Blindstroms erzeugt werden.

Des Weiteren ist eine Ausführungsform des erfindungsgemäßen Verfahrens bevorzugt, bei der der Blindstrom einen impulsförmigen, insbesondere dreiecksförmigen, Verlauf aufweist. Auf diese Weise kann eine besonders effektive Frittung der elektrischen Kontakte innerhalb einer kurzen Zeit durchgeführt werden.

Ferner ist eine Ausführungsform des erfindungsgemäßen Verfahrens besonders bevorzugt, bei der der Blindstrom zusätzlich zu einem Wirkstrom zugeführt wird, der in Reaktion auf einen Fahrerwunsch bzw. Lenkeingabe über das Lenkrad erzeugt wird. Eine Frittung kann auf diese Weise auch im laufenden Betrieb der Antriebsvorrichtung durchgeführt werden, ohne den Betrieb der Antriebsvorrichtung spürbar einzuschränken.

Vorteilhafterweise wird das erfindungsgemäße Verfahren dadurch weitergebildet, dass der Blindstrom bei der, insbesondere jeder, Inbetriebnahme der Antriebsvorrichtung zugeführt wird. Somit wird bei der Inbetriebnahme sichergestellt, dass die elektrischen Widerstände der Kontakte niedrig und symmetrisch verteilt sind.

Ebenso wird das erfindungsgemäße Verfahren dadurch vorteilhaft weitergebildet, dass der Blindstrom nach Schließen der elektrischen Kontakte zugeführt wird. Durch die regelmäßige Frittung der elektrischen Kontakte kann sichergestellt werden, dass die elektrischen Kontakte den vorgegebenen Norm- bzw. Soll-Widerstand einhalten.

Die Erfindung umfasst ferner eine Steuereinrichtung zum Steuern einer elektrischen Motoreinrichtung und zum Ausführen eines Verfahrens nach einem der vorgenannten Ausführungsformen.

Ferner umfasst die Erfindung eine Servolenkungsvorrichtung für Kraftfahrzeuge mit einer vorgenannten Steuereinrichtung.

Weitere bevorzugte Ausführungsformen ergeben sich aus der nachfolgenden Beschreibung eines Ausführungsbeispiels an Hand von Figuren.

Es zeigen:
Fig. 1 eine schematische Darstellung eines Ausführungsbeispiels der erfindungsgemäßen Antriebsvorrichtung,
Fig. 2 einen beispielhaften Aufbau eines Sternpunktrelais mit mehreren elektrischen Kontakten,
Fig. 3 eine schematische Darstellung des Stator- und Rotormagnetfeldes und der dazu korrespondierenden Blindströme für den Fall gleichmäßig gefritteter Kontakte,
Fig. 4 eine schematische Darstellung des Stator- und Rotormagnetfeldes und der dazu korrespondierenden Blindstromflüsse für den Fall, dass zunächst eine ungleichmäßige Frittung der Kontakte vorliegt,
Fig. 5 einen beispielhaften Verlauf des Blindstroms zum Fritten der elektrischen Kontakte gemäß des erfindungsgemäßen Verfahrens,
Fig. 6 einen Drehwinkelverlauf eines Rotorelements in Abhängigkeit von einem weiteren beispielhaften Verlauf des Blindstroms, und
Fig. 7 einen weiteren beispielhaften Verlauf des Blindstroms in den Wicklungssträngen der elektrischen Motoreinrichtung.

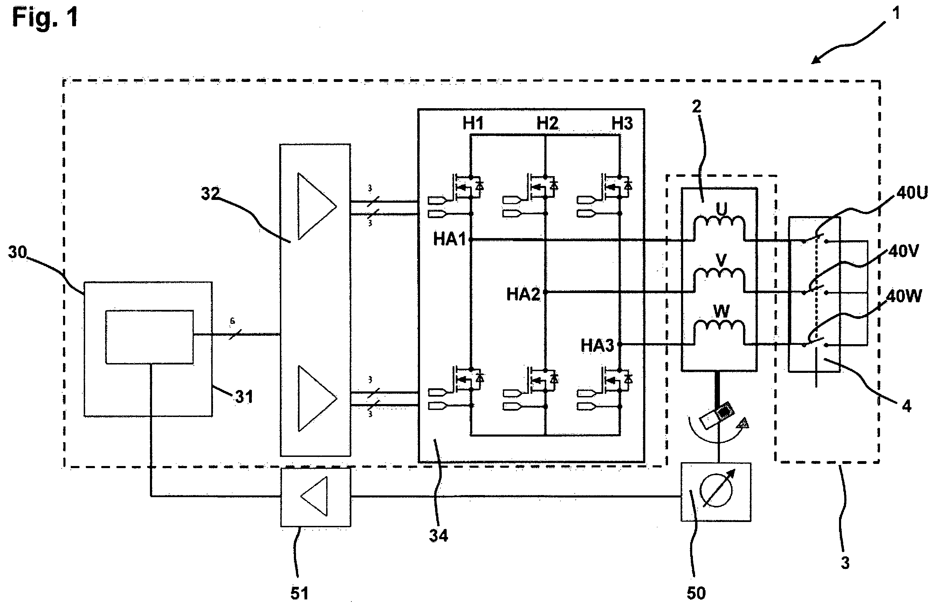

Figur 1 zeigt eine schematische Darstellung einer Antriebsvorrichtung 1 zum Ausführen des erfindungsgemäßen Verfahrens.

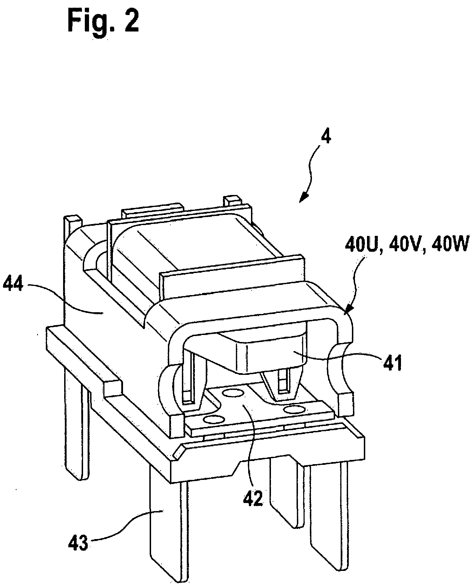

Die Antriebsvorrichtung 1 weist eine elektrische Motoreinrichtung 2 und eine Steuereinrichtung 3 zum Zuführen eines elektrischen Stroms zur Steuerung der Motoreinrichtung 2 auf. Die Motoreinrichtung 2 ist mit den elektrischen Kontakten 40U, 40V, 40W elektrisch gekoppelt, so dass der Strom der Motoreinrichtung zugeführt wird, sobald die elektrischen Kontakte 40U, 40V, 40W geschlossen sind. Die elektrischen Kontakte 40U, 40V, 40W gehören in diesem Ausführungsbeispiel zu einem Sternpunktrelais 4, das in Figur 2 gezeigt ist. Denkbar sind jedoch auch andere Verbindungsformen der Kontakte 40U, 40V, 40W, beispielsweise zu einer Dreieckschaltung.

Die hier gezeigte Antriebsvorrichtung 2 ist für eine Servolenkungsvorrichtung eines Kraftfahrzeugs vorgesehen. Die Steuereinrichtung 3 ist als eine Leiterplatine ausgebildet, auf der mehrere elektronische Bauteile angeordnet sind. Über die Motoreinrichtung 2 wird ein unterstützendes Drehmoment zur Lenkung des Kraftfahrzeugs bereitgestellt. Das erfindungsgemäße Verfahren ist jedoch nicht auf die hier beschriebene Anwendung beschränkt, sondern kann allgemein auf alle Arten von Antriebsvorrichtung mit einer elektrischen Motoreinrichtung und Sternpunktrelais angewendet werden.

Die Steuereinrichtung 3 weist einen Mikrocontroller 30 auf, der eine Regeleinrichtung 31 mit einer Speichereinheit und einer Recheneinheit zum Ausführen des erfindungsgemäßen Verfahrens aufweist. Der Mikrokontroller 30 ist hierzu mit einer Gate Drive Unit 32 ausgangsseitig verbunden. Die Gate Drive Unit 32 ist wiederum mit einer Leistungsendstufe 34 verbunden. Die Leistungsendstufe 34 weist drei Halbbrücken H1, H2, H3 auf, die jeweils über einen Anschlusspunkt HA1, HA2, HA3 mit einer Wicklungsspule U, V, W der elektrischen Motoreinrichtung elektrisch verbunden sind und in Abhängigkeit von der Steuereinrichtung 3 vorgegebenen Regelung der elektrischen Motoreinrichtung 2 eine pulsweiten modulierte Stromzufuhr an die Wicklungsspulen U, V, W durchführt. Ferner befindet sich das Sternpunktrelais 4 auf der Leiterplatine der Steuereinrichtung 3. Das Sternpunktrelais 4 dient dazu, im Notfall den elektrischen Kontakt zwischen der Steuereinrichtung 3 und der elektrischen Motoreinrichtung 2 zu unterbrechen und auf diese Weise eine mögliche Bremswirkung der elektrischen Motoreinrichtung 2 auf die Lenkung zu verhindern.

Die elektrische Motoreinrichtung 2 ist als bürstenloser Gleichstrommotor ausgebildet. Denkbar sind aber auch andere Formen gängiger elektrischer Motoren. Die Motoreinrichtung 2 weist ein Rotorelement mit einem Rotormagnetfeld und ein Statorelement mit mehreren Wicklungsspulen U, V, W auf. Das Rotorelement ist als Permanentmagnet ausgebildet. Durch zuführen des Stroms in die Wicklungsspulen U, V, W wird das Statormagnetfeld erzeugt, das bei entsprechender Stellung zum Rotormagnetfeld ein Drehmoment auf das Rotorelement ausüben kann. In dem speziellen Fall, dass das Statormagnetfeld in die gleiche Richtung wie das Rotormagnetfeld ausgerichtet ist, wird kein Drehmoment auf das Rotorelement ausgeübt, so dass die elektrische Motoreinrichtung 2 trotz eines Stromflusses drehmomentfrei betreibbar ist.

Ferner weist die Motoreinrichtung 2 einen Sensorelement 50 zum Messen der relativen Position des Rotorelements zum Statorelement auf. Eine Verarbeitungseinheit 51 wertet die Signale des Sensorelements 50 aus und übermittelt diese an den Mikrocontroller 30.

Figur 2 zeigt ein Sternpunktrelais 4, das drei elektrische Kontakte 40U, 40V, 40W aufweist. Die elektrischen Kontakte 40U, 40V, 40W sind jeweils mit den Wicklungsspulen U, V, W elektrisch gekoppelt und können mithilfe eines Schalters 41 und einer Kontaktplatte 42 geöffnet und geschlossen werden. Die in erster Linie zu frittenden Kontakte 40U, 40V, 40W können als Schließkontakte ausgebildet sein und sind innerhalb eines Gehäuses 44 des Sternpunktrelais angeordnet. Die Kontakte 40U, 40V, 40W sind mittels des Schalters 41 zwischen zwei Positionen schaltbar, um einen Kontakt mit der Kontaktplatte 42 herzustellen. Die Kontaktplatte 42 ist mit mehreren plattenförmigen Steckkontakten 43 verbunden über die das Sternpunktrelais 4 auf eine Leiterplatine anbringbar ist. Das erfindungsgemäße Verfahren ermöglicht die Kontaktflächen mittels zufuhr eines Blindstroms zu fritten, um den elektrischen Norm - bzw. Sollwiderstand an allen Kontakten 40U, 40V, 40W herzustellen.

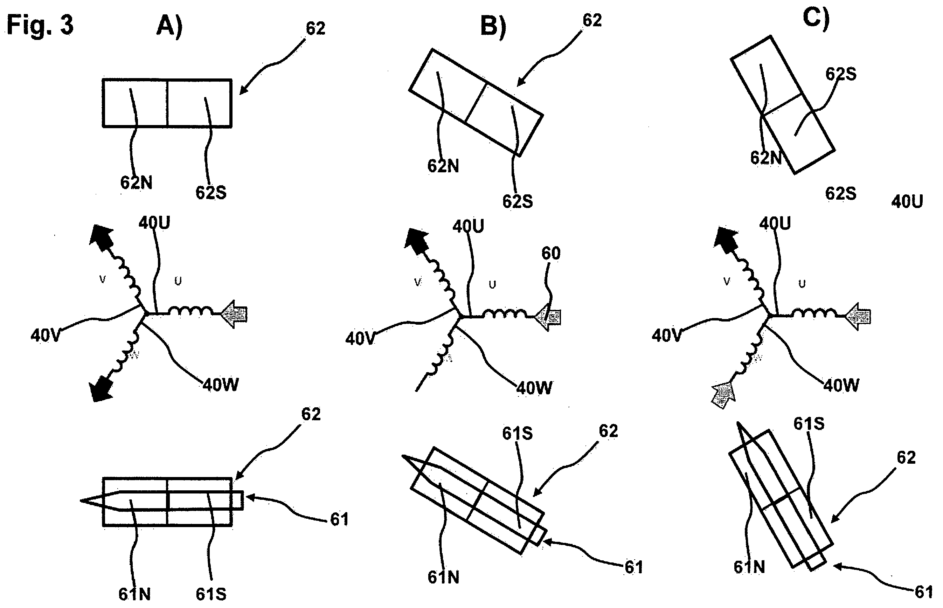

Das erfindungsgemäße Verfahren wird nachfolgend Anhand der Figuren 3 bis 5 näher beschrieben.

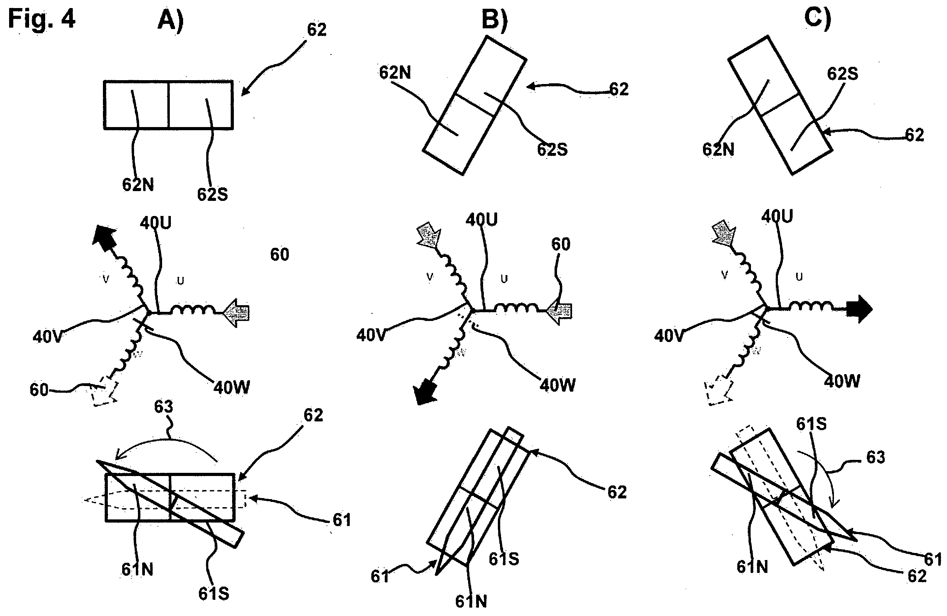

Zum Fritten der elektrischen Kontakte 40U, 40V, 40W wird ein als Blindstrom wirkender Strom (nachfolgend als Blindstrom bezeichnet) an die Motoreinrichtung 2 zugeführt, wobei dieser Blindstrom auch durch die elektrischen Kontakte 40U 40V, 40W fließt. Die Motoreinrichtung 2 ist mittels des Blindstroms im Wesentlichen drehmomentfrei betreibbar. In den Figuren 3 und 4 sind die Stromflüsse durch die Pfeile 60 dargestellt, wobei die Pfeilrichtung die Richtung der Stromflüsse wiedergibt.

Figur 3 stellt die Zufuhr der Blindströme für drei unterschiedliche Fälle dar, bei der das Statormagnetfeld 61 gleichsinnig bzw. in die gleiche Richtung wie das Rotormagnetfeld 62 ausgerichtet ist, so dass das Rotorelement positionstreu betreibbar ist. Die hier dargestellten Fälle können beispielsweise dadurch eintreten, dass eine wirksame Frittung in der Vergangenheit, beispielsweise bei der letzten Inbetriebnahme, stattgefunden hat und die elektrischen Kontakte 40U, 40V, 40W im wesentlichen einen gleichmäßigen Widerstand aufweisen. Je nach Lage des Rotorelements wird der Blindstrom derart zugeführt, dass sich ein zum Rotormagnetfeld 62 gleichsinnig ausgerichtetes Statormagnetfeld 61 einstellt bzw. die Pole 61N, 61S des Statormagnetfeldes 61 im Wesentlichen gleichsinnig zu den Polen 62N, 62S des Rotormagnetfeldes 62 ausgerichtet sind. Befindet sich das Rotorelement 62 in einer Position wie in Abschnitt B) dargestellt, wird im Blindstrombetrieb nur ein Teil der Wicklungsspulen U, V, W, mit einem Blindstrom versorgt, wie es im Abschnitt B) dargestellt ist. In anderen Positionen fließt der Strom durch alle Wicklungsspulen U, V, W, vergleiche Abschnitte A) und C) . Auf diese Weise können alle elektrischen Kontakte 40U, 40V, 40W gleichmäßig gefrittet werden. Die Position des Rotorelements wird anhand des Sensorelements 50 ermittelt.

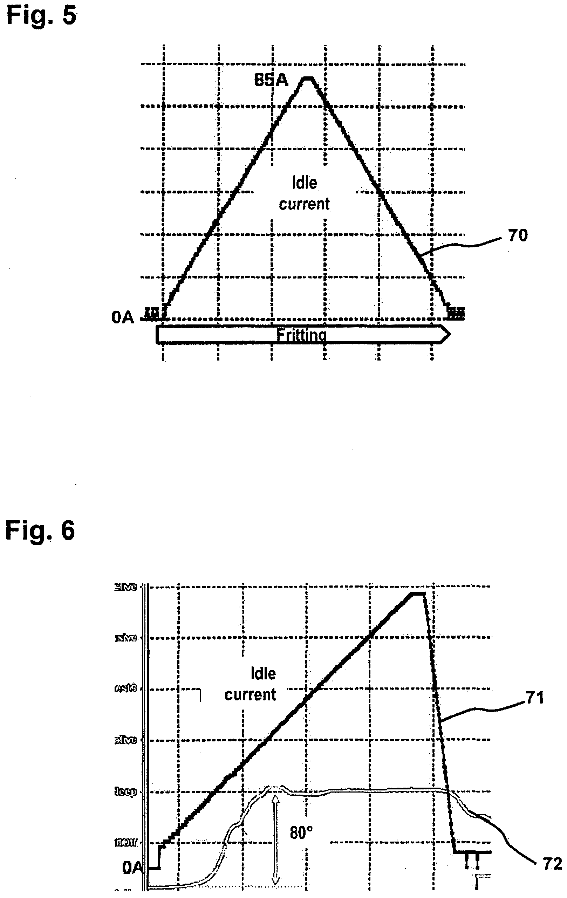

Figur 5 zeigt einen beispielhaften Verlauf 70 der Summe der durch die Wicklungsspulen U, V, W fließenden Blindströme. In der vertikalen Achse ist die Stromgröße aufgetragen. Die Abszisse stellt hier die Zeitachse dar. Der Blindstrom wird impulsförmig zugeführt, vorzugsweise mit einem dreiecksförmigen Verlauf 70, wie in Figur 5 dargestellt. Andere Verläufe 71 sind aber auch denkbar, wie z. B. in Figur 6 dargestellt.

Der Impuls hat einen definierten Verlauf, Dauer und Höchstwert. Der Blindstromimpuls wird vorzugsweise für einen Zeitraum von kleiner als 500ms zugeführt. Vorzugsweise liegt der Höchstwert des Blindstroms im Bereich von 50A bis 100A. Der Blindstrom kann dabei zusätzlich zu einem Wirkstrom zugeführt werden. In diesem Fall überlagern sich Wirk- und Blindstrom. Vorzugsweise wird der Stromanstieg des Blindstroms angepasst, um das Rotorelement möglichst positionstreu bzw. bewegungsfrei betreiben zu können. Versuche haben ergeben, dass insbesondere der Stromanstieg einen wesentlichen Einfluss auf das Frittungsergebnis und der Positionstreue des Rotorelements ausübt. Als vorteilhaft hat es sich ferner ergeben, den Stromanstieg zu begrenzen, um eine ruckartige Bewegung des Rotorelements im Falle einer schlechten Frittung zu verhindern.

Der Blindstrom kann bei jeder Inbetriebnahme bzw. bei der Bereitstellung der Antriebsvorrichtung zugeführt werden. Alternativ kann der Blindstrom nach dem Schließen der elektrischen Kontakte zugeführt werden. Dies kann auch in Intervallen erfolgen, beispielsweise für jeden zehnten Kurzschluss.

Figur 4 zeigt die Anwendung des Verfahrens für den Fall, dass einer der elektrischen Kontakte, hier der Kontakt 40W, einen höheren elektrischen Widerstand als die anderen elektrischen Kontakte 40U, 40V aufweist. In Figur 4 ist der höhere Widerstand durch den Querstrich am elektrischen Kontakt 40W gekennzeichnet. Das Problem liegt in diesem Fall darin, dass der Blindstrom so zugeführt wird, um eine Gleichsinnigkeit der Magnetfelder 61, 62 zu erreichen, dieser sich aufgrund der unsymmetrischen Widerstände der elektrischen Kontakte 40U, 40V, 40W nicht so wie gewünscht einstellt. In diesem Fall tritt ein selbstregulatorischer Effekt des Verfahrens bzw. eine Nachregelmechanismus ein, der dafür sorgt, dass alle elektrischen Kontakte 40U, 40V, 40W gefrittet werden und auf diese Weise die elektrischen Kontakte im Wesentlichen gleich große Widerstände aufweisen. Das Statormagnetfeld 61 wirkt hierzu derart mit dem Rotormagnetfeld 62 zusammen, so dass sich eine Gleichsinnigkeit der Magnetfelder einstellt, wobei das Rotorelement höchstens innerhalb eines Bereichs von 90° verdreht wird, der einen hinnehmbaren Bewegungsbereich des Rotorelements darstellt.

Die Abschnitte A) und C) in Figur 4 stellen analoge Ausgangssituationen dar, in denen das Frittungsverfahren einsetzt. Wie im Abschnitt A) der Figur 4 gezeigt, wird auch in diesem Fall grundsätzlich ein Blindstrom zugeführt, so dass sich ein Statormagnetfeld 61 einstellt, womit das Rotorelement im Wesentlichen positionstreu betreibbar wäre. Aufgrund des erhöhten Widerstandes des Kontaktes 40W weicht der Blindstromfluss von dem vorgegebenen Blindstromfluss ab, wodurch sich ein vom vorgegebenen Statormagnetfeld 61 abweichendes Statormagnetfeld 61 einstellt. Durch den elektrischen Kontakt 40W und die damit verbundene Wicklungsspule W fließt weniger oder kein Blindstrom, was in der Figur 4 durch die gestrichelte Linie des Pfeils 60 dargestellt ist. Das sich tatsächlich einstellende Statormagnetfeld 61 ist nicht gleichsinnig zum Rotormagnetfeld 62 ausgerichtet und wirkt mit dem Magnetfeld 62 des Rotorelements so zusammen, dass ein Drehmoment auf das Rotorelement ausgeübt wird. In der Figur 4 ist die Sollstellung des Magnetfelds des Statorelements gestrichelt dargestellt. Das Statormagnetfeld daher in einem kontinuierlich derart angepasst, um eine Gleichsinnigkeit der Magnetfelder 61, 62 zu erreichen. Das Statormagnetfeld 61 läuft dem Rotormagnetfeld 62 nach, was in Figur 4 durch den Pfeil 63 dargestellt wird. Hierzu wird vorteilhafterweise die relative Drehwinkelposition des Rotorelements zum Statorelement erfasst und der den Wicklungsspulen U, V, W zugeführte Blindstrom variiert. Während das Statormagnetfeld 61 kontinuierlich angepasst wird bzw. nachgeregelt wird, wird auch das Rotorelement durch die Abstoßung der Pole 61N, 62N und 61S, 62S mit verdreht. Dabei kann es auch vorkommen, dass das Statormagnetfeld 61 dem Rotormagnetfeld 62 vorauseilt, entgegen der Darstellung in den Abschnitten A) und C). Das Statormagnetfeld 61 pendelt sich somit um das Rotormagnetfeld 62 ein, bis es gleichsinnig zum Rotormagnetfeld 62 ausgerichtet ist, wie in Abschnitt B) dargestellt. Der Vorgang funktioniert auch dann, wenn das Rotormagnetfeld 62 in einem Bereich von 90° zum Statormagnetfeld 61 verdreht angeordnet ist. Das Verfahren funktioniert unabhängig davon, welche elektrischen Widerstände an den Kontakten 40U, 40V, 40W vorherrschen. Es gibt stets eine Position des Rotorelements, zu der sich die Magnetfelder 61, 62 gleichsinnig ausrichten lassen, um den Frittungsvorgang vollständig durchzuführen.

In Figur 6 ist die Verdrehung 72 des Rotorelements beim Aufschalten eines rampenförmigen Blindstroms (Summe der Blindstrombeträge) dargestellt, wobei die Abszisse die Zeitachse darstellt und die vertikale Achse den Stromwert des Blindstroms bzw. Drehwinkel des Rotorelements. Wie in Figur 4, Abschnitt B) exemplarisch dargestellt, findet trotz des stetigen Anstiegs des Blindstroms keine weitere Verdrehung des Rotorelements statt, nachdem es bei ca. 80° die stabile Lage eingenommen hat.

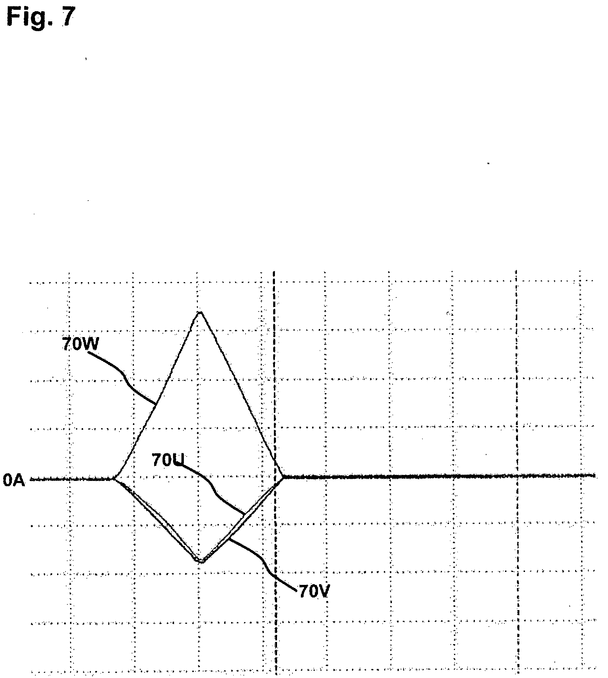

Die Anwendung des erfindungsgemäßen Verfahrens führt automatisch dazu, dass sich am elektrischen Kontakt 40W mit dem höchsten elektrischen Widerstand, wie in Figur 4 dargestellt, der höchste Blindstrom einstellt, wie in Figur 7 dargestellt. Figur 7 stellt den Verlauf 70U, 70V, 70W des Blindstroms durch die einzelnen Wicklungsspulen U, V, W für den idealen Fall symmetrischer Widerstände dar. Es zeigt zum einen den impulsförmigen Verlauf des Blindstroms für einen kurzen Zeitraum. Analog zum Abschnitt B) aus Figur 4 fließen die Blindströme in die Wicklungsspulen U und V rein und aus der Wicklungsspule W heraus. Der Betrag des Blindstroms in der Wicklungsspulen W entspricht der Summe der Beträge der Blindströme in den Wicklungsspulen U und V und ist damit im Wesentlichen betragsmäßig doppelt so hoch. Bei unsymmetrischer Verteilung der Widerstände verläuft der Stromanstieg üblicherweise nicht linearförmig.

Das erfindungsgemäße Verfahren ist nicht auf dieses Ausführungsbeispiel beschränkt, sondern kann im Zusammenhang mit anderen elektrischen Antrieben angewendet werden.

## Patentansprüche

1. Verfahren zum Fritten elektrischer Kontakte (40U, 40V, 40W) einer Antriebsvorrichtung (1) mit einer elektrischen Motoreinrichtung (2), einer Steuereinrichtung (3) zum Zuführen eines elektrischen Stroms zur Steuerung der Motoreinrichtung (2), wobei der Strom an die Motoreinrichtung (2) zugeführt wird, sobald die elektrischen Kontakte (40U, 40V, 40W) geschlossen sind, **gekennzeichnet durch** Zuführen eines im Wesentlichen reinen Blindstroms an die Motoreinrichtung (2), der **durch** die elektrischen Kontakte (40U, 40V, 40W) fließt.

2. Verfahren nach Anspruch 1, **dadurch gekennzeichnet, dass** es sich um die elektrischen Kontakte (40U, 40V, 40W) eines Sternpunktrelais handelt.

3. Verfahren nach einem der vorstehenden Ansprüche, **dadurch gekennzeichnet, dass** es sich bei der Antriebsvorrichtung (1) um eine Servolenkungsvorrichtung für Kraftfahrzeuge handelt.

4. Verfahren nach Anspruch 1, **dadurch gekennzeichnet, dass** die Motoreinrichtung (2) mittels des Blindstroms im Wesentlichen drehmomentfrei betreibbar ist.

5. Verfahren nach einem der vorstehenden Ansprüche, wobei die Motoreinrichtung (2) ein Rotorelement mit einem Rotormagnetfeld (62) und ein Statorelement mit mehreren Wicklungsspulen (U, V, W) aufweist, wobei durch zuführen des Blindstroms in die Wicklungsspulen (U, V, W) ein Statormagnetfeld (61) erzeugbar ist, **dadurch gekennzeichnet, dass** der Blindstrom derart zugeführt wird, dass die Pole (61 N, 61 S) des Statormagnetfeldes (61) gleichsinnig zu den Polen (62N, 62S) des Rotormagnetfeldes (62) ausgerichtet sind.

6. Verfahren nach Anspruch 5, **dadurch gekennzeichnet, dass** der Blindstrom kontinuierlich derart angepasst wird, dass die Pole (61 N, 61 S) des Statormagnetfeldes (61) im Wesentlichen gleichsinnig zu den Polen (62N, 62S) des Rotormagnetfeldes (62) ausgerichtet sind.

7. Verfahren nach einem der vorstehenden Ansprüche, **dadurch gekennzeichnet, dass** die Motoreinrichtung (2) ein Sensorelement (50) zum Messen der relativen Position des Rotorelements zum Statorelement aufweist, wobei der Blindstrom in Abhängigkeit von der relativen Position des Rotorelements zugeführt wird.

8. Verfahren nach einem der vorstehenden Ansprüche, **dadurch gekennzeichnet, dass** der Blindstrom einen impulsförmigen, insbesondere dreiecksförmigen, Verlauf (70, 71) aufweist.

9. Verfahren nach einem der vorstehenden Ansprüche, **dadurch gekennzeichnet, dass** der Blindstrom zusätzlich zu einem Wirkstrom zugeführt wird.

10. Verfahren nach einem der vorstehenden Ansprüche, **dadurch gekennzeichnet, dass** das der Blindstrom bei jeder Inbetriebnahme der Antriebsvorrichtung (1) zugeführt wird.

11. Verfahren nach einem der vorstehenden Ansprüche, **dadurch gekennzeichnet, dass** der Blindstrom nach Schließen des elektrischen Kontaktes (40U, 40V, 40W) zugeführt wird.

12. Steuereinrichtung (3) zum Steuern einer elektrischen Motoreinrichtung (2) zum Ausführen eines Verfahrens nach einem der Ansprüche 1 bis 11.

13. Servolenkungsvorrichtung für Kraftfahrzeuge mit einer Steuereinrichtung (3) nach Anspruch 12.

## Claims

1. Method for fritting electrical contacts (40U, 40V, 40W) of a drive apparatus (1) having an electrical motor device (2), a control device (3) for supplying an electric current for controlling the motor device (2), wherein the current is supplied to the motor device (2) as soon as the electrical contacts (40U, 40V, 40W) are closed, **characterized by** supplying a substantially pure reactive current to the motor device (2), the said reactive current flowing through the electrical contacts (40U, 40V, 40W).

2. Method according to Claim 1, **characterized in that** the electrical contacts (40U, 40V, 40W) are the electrical contacts of a star point relay.

3. Method according to either of the preceding claims, **characterized in that** the drive apparatus (1) is a power steering apparatus for motor vehicles.

4. Method according to Claim 1, **characterized in that** the motor device (2) can be operated substantially without torque by means of the reactive current.

5. Method according to one of the preceding claims, wherein the motor device (2) has a rotor element with a rotor magnetic field (62) and has a stator element with a plurality of winding coils (U, V, W), wherein a stator magnetic field (61) can be generated by supplying the reactive current to the winding coils (U, V, W), **characterized in that** the reactive current is supplied in such a way that the poles (61N, 61S) of the stator magnetic field (61) are oriented in the same direction as the poles (62N, 62S) of the rotor magnetic field (62).

6. Method according to Claim 5, **characterized in that** the reactive current is continuously adjusted in such a way that the poles (61N, 61S) of the stator magnetic field (61) are oriented substantially in the same direction as the poles (62N, 62S) of the rotor magnetic field (62).

7. Method according to one of the preceding claims, **characterized in that** the motor device (2) has a sensor element (50) for measuring the relative position of the rotor element in relation to the stator element, wherein the reactive current is supplied depending on the relative position of the rotor element.

8. Method according to one of the preceding claims, **characterized in that** the reactive current has a pulsed, in particular triangular, profile (70, 71).

9. Method according to one of the preceding claims, **characterized in that** the reactive current is supplied in addition to a real current.

10. Method according to one of the preceding claims, **characterized in that** the reactive current is supplied each time the drive apparatus (1) is put into operation.

11. Method according to one of the preceding claims, **characterized in that** the reactive current is supplied after the electrical contact (40U, 40V, 40W) is closed.

12. Control device (3) for controlling an electrical motor device (2) for executing a method according to one of Claims 1 to 11.

13. Power steering apparatus for motor vehicles having a control device (3) according to Claim 12.

## Revendications

1. Procédé de frittage de contacts électriques (40U, 40V, 40W) d'un dispositif d'entraînement (1) comprenant un appareil à moteur électrique (2), un appareil de commande (3) destiné à acheminer un courant électrique servant à commander l'appareil à moteur (2), le courant étant acheminé à l'appareil à moteur (2) dès que les contacts électriques (40U, 40V, 40W) sont fermés, **caractérisé par** l'acheminement d'un courant réactif sensiblement pur à l'appareil à moteur (2), lequel circule à travers les contacts électriques (40U, 40V, 40W).

2. Procédé selon la revendication 1, **caractérisé en ce que** les contacts électriques (40U, 40V, 40W) sont ceux d'un relais à point neutre.

3. Procédé selon l'une des revendications précédentes, **caractérisé en ce que** le dispositif d'entraînement (1) est un dispositif de direction assistée pour véhicules automobiles.

4. Procédé selon la revendication 1, **caractérisé en ce que** l'appareil à moteur (2), par l'intermédiaire du courant réactif, peut fonctionner sensiblement sans couple.

5. Procédé selon l'une des revendications précédentes, selon lequel l'appareil à moteur (2) possède un élément rotor doté d'un champ magnétique de rotor (62) et d'un élément stator doté de plusieurs bobines d'enroulement (U, V, W), un champ magnétique de stator (61) pouvant être généré en acheminant le courant réactif dans les bobines d'enroulement (U, V, W), **caractérisé en ce que** le courant réactif est acheminé de telle sorte que les pôles (61N, 61S) du champ magnétique de stator (61) sont orientés dans le même sens par rapport aux pôles (62N, 62S) du champ magnétique de rotor (62).

6. Procédé selon la revendication 5, **caractérisé en ce que** le courant réactif est continuellement adapté de sorte que les pôles (61N, 61S) du champ magnétique de stator (61) sont orientés sensiblement dans le même sens par rapport aux pôles (62N, 62S) du champ magnétique de rotor (62).

7. Procédé selon l'une des revendications précédentes, **caractérisé en ce que** l'appareil à moteur (2) possède un élément de détection (50) destiné à mesurer la position relative de l'élément rotor par rapport à l'élément stator, le courant réactif étant acheminé en fonction de la position relative de l'élément rotor.

8. Procédé selon l'une des revendications précédentes, **caractérisé en ce que** le courant réactif présente un tracé (70, 71) impulsionnel, notamment de forme triangulaire.

9. Procédé selon l'une des revendications précédentes, **caractérisé en ce que** le courant réactif est acheminé en complément d'un courant actif.

10. Procédé selon l'une des revendications précédentes, **caractérisé en ce que** le courant réactif est acheminé à chaque mise en service du dispositif d'entraînement (1).

11. Procédé selon l'une des revendications précédentes, **caractérisé en ce que** le courant réactif est acheminé après la fermeture des contacts électriques (40U, 40V, 40W).

12. Appareil de commande (3) servant à commander un appareil à moteur électrique (2) destiné à mettre en oeuvre un procédé selon l'une des revendications 1 à 11.

13. Dispositif de direction assistée pour véhicules automobiles équipé d'un appareil de commande (3) selon la revendication 12.
